# FASCICULE DE BREVET EUROPEEN

(11) **EP 1 555 404 B1**
(45) Date de publication et mention de la délivrance du brevet: **20.06.2007**
(21) Numéro de dépôt: 05300020.4
(22) Date de dépôt: 11.01.2005
(51) Int. Cl.: F02B 37/12

(54) **Système et procédé de commande d'un moteur thermique suralimenté par deux turbocompresseurs**
System und Verfahren zur Regelung einer Brennkraftmaschine aufgeladen mit zwei Turbolader
System and method for controlling an internal combustion engine supercharged by two turbochargers

(30) Priorité: 14.01.2004 FR 0400279
(43) Date de publication de la demande: 20.07.2005
(73) Titulaire: Renault s.a.s., 92100 Boulogne Billancourt (FR)
(72) Inventeur: Fontvieille, Laurent, 91190 Gif sur Yvette (FR); Lombardin, Jacques-Olivier, 91600 Savigny sur Orge (FR)

(56) Documents cités:
- DE-C- 19 810 174
- FR-A- 2 837 526
- US-B1- 6 575 148

## Description

L'invention concerne un système et un procédé de commande d'un moteur thermique suralimenté par deux turbocompresseurs et alimentant deux bancs de cylindres.

Dans le cas de moteurs thermiques suralimentés à deux bancs de cylindres, tels que des moteurs dits V6 ou V8 (6 ou 8 cylindres disposés en V), on prévoit quelquefois deux turbocompresseurs, chaque turbocompresseur recevant respectivement des gaz d'échappement des cylindres d'un banc. L'air d'admission comprimé par les turbocompresseurs alimente les cylindres par l'intermédiaire d'un collecteur d'admission. On connaît deux configurations différentes. Dans une première configuration, chaque banc comporte un collecteur spécifique alimenté par un turbocompresseur. Dans une deuxième configuration, les deux turbocompresseurs alimentent un collecteur commun pour alimenter l'ensemble des cylindres.

Dans le cas d'un moteur avec un collecteur commun, le fonctionnement des turbocompresseurs n'est pas forcément équilibré, et il est nécessaire de prévoir un procédé de régulation du fonctionnement des turbocompresseurs pour qu'ils délivrent chacun sensiblement le même débit d'air. C'est ce que propose le procédé des documents DE 19810174 et FR 2837526. Dans ce dernier, on détermine un écart de débit d'air en amont des compresseurs, puis on détermine un écart de vitesses de rotation des turbocompresseurs. On en déduit alors un signal de correction grâce à un régulateur, puis on ajoute ou on retranche ce signal de correction à un signal d'actionnement des turbocompresseurs, pour que chaque turbocompresseur reçoivent un signal d'actionnement corrigé.

Cependant, le demandeur a constaté que les temps de réaction du régulateur n'étaient pas toujours satisfaisants, en particulier pendant des phases transitoires de changement de régime ou de niveau de puissance du moteur.

C'est donc un objectif de l'invention de fournir un procédé et un système de commande d'un moteur thermique suralimenté par deux turbocompresseurs et alimentant deux bancs de cylindres par un collecteur commun, avec une régulation de l'équilibrage des deux turbocompresseurs très réactive.

Avec cet objectif en vue, l'invention a pour objet un procédé de commande d'un moteur suralimenté en air par deux turbocompresseurs alimentant deux bancs de cylindres par un collecteur commun, dans lequel :
- on détermine une consigne de pression de suralimentation,
- on détermine un écart de débit d'air traversant chaque turbocompresseur,
- on détermine un signal d'actionnement des turbocompresseurs pour obtenir la pression de suralimentation dans le collecteur,
- on commande chaque turbocompresseur avec le signal d'actionnement corrigé par des signaux de correction pour diminuer l'écart de débit d'air entre les turbocompresseurs,
caractérisé en ce que les signaux de correction comprennent une valeur de correction mémorisée et fonction du point de fonctionnement du moteur.

L'inventeur a constaté que les écarts de fonctionnement entre les turbocompresseurs nécessitaient sensiblement toujours les mêmes corrections pour un point de fonctionnement donné. Ainsi, en appliquant un signal de correction avec une valeur mémorisée, le fonctionnement des turbocompresseurs est très rapidement proche des conditions d'équilibre, en particulier pendant les phases de changement de point de fonctionnement.

Selon un perfectionnement, la valeur de correction mémorisée est apprise lors du fonctionnement du moteur. Ainsi, la valeur mémorisée est parfaitement adaptée au moteur et à ses accessoires, en prenant en compte les dispersions de fabrication et leurs évolutions au cours de la vie du moteur.

De manière particulière, la valeur de correction mémorisée est issue du signal de correction et mémorisée lorsque des conditions d'apprentissage sont réunies. Le signal de correction, élaboré pour diminuer l'écart de débit, reflète la compensation qu'il est nécessaire d'apporter pour réduire l'écart de débit. Il est donc possible d'en extraire la valeur de correction à mémoriser.

De préférence, les conditions d'apprentissage comportent des critères de stabilité sur au moins l'une des variables suivantes : la vitesse de rotation du moteur, le débit de carburant, l'écart de pression de suralimentation, l'écart de débit d'air. Ces variables permettent de représenter le point de fonctionnement du moteur. Les critères de stabilité permettent de s'affranchir de tout problème de phénomènes transitoires et dynamiques et d'être certain de 1a représentativité de la valeur mémorisée.

De même, les conditions d'apprentissage comportent des conditions d'état, parmi lesquelles l'activation de la détermination de la consigne de pression de suralimentation et du signal de correction. Lorsque la détermination de la consigne de pression de suralimentation est désactivée, par exemple à faible charge et bas régime, ou par suite d'un défaut constaté, un signal de correction n'aurait pas de véritable signification. Il est donc préférable de l'ignorer pour éviter de mémoriser de fausses valeurs, ou des valeurs non significatives.

On peut prévoir de plus que les critères de stabilité et les conditions d'état doivent être satisfaits pendant au moins une durée prédéterminée pour que les conditions d'apprentissage soient réunies. On renforce la garantie de stabilité du signal de correction.

Selon une réalisation particulière, le signal de correction est déterminé par la somme de la valeur de correction mémorisée et d'un signal de régulation issu d'une régulation de type proportionnel-intégrale-dérivée (PID), la valeur apprise étant un terme intégral de la régulation. Ce type de régulation, très classiquement utilisé, reçoit donc en entrée l'écart de débit et délivre un signal de régulation. Le signal de correction est le signal de régulation auquel on ajoute la valeur de correction mémorisée. La régulation détermine trois termes, dont un terme dit intégral, la somme des trois termes formant le signal de régulation. En conditions stables, seul le terme intégral n'est pas nul et il permet de compenser l'écart de débit, en combinaison avec la valeur de correction mémorisée. En mémorisant le terme intégral, on mémorise la compensation à faire pour obtenir le plus rapidement possible l'annulation de l'écart de débit.

De manière particulière, la valeur de correction mémorisée est stockée dans une cartographie ayant en entrée des variables représentant le point de fonctionnement du moteur.

Selon une première variante, avant de mémoriser une nouvelle valeur dans la cartographie, on vérifie que le point de fonctionnement du moteur a changé et n'utilise plus la valeur à remplacer. Ainsi, on ne risque pas d'introduire un brusque changement dans le signal de correction, en n'ayant pas à lire et utiliser la valeur nouvellement mémorisée.

Selon une autre variante, au moment de mémoriser une nouvelle valeur dans la cartographie, on annule le terme intégral dans la régulation. Ainsi, la somme de la valeur mémorisée et du terme intégral est constante, avant ou après la mémorisation.

L'invention a aussi pour objet un système de commande d'un moteur suralimenté en air par deux turbocompresseurs alimentant deux bancs de cylindres par un collecteur commun, le système comportant :
- des moyens de commande pour déterminer une consigne de pression de suralimentation,
- des moyens de mesure d'un écart de débit d'air traversant chaque turbocompresseur,
- des moyens de commande pour délivrer un signal d'actionnement des turbocompresseurs et obtenir la pression de suralimentation dans le collecteur,
- des moyens d'équilibrage pour déterminer un signal de correction permettant de d'établir un signal d'actionnement corrigé pour chaque turbocompresseur, et obtenir un débit d'air équilibré entre les turbocompresseurs.
Le système comporte en outre des moyens de mémorisation pour fournir, en fonction du point de fonctionnement du moteur, une valeur de correction mémorisée pour composer le signal de correction.

L'invention sera mieux comprise et d'autres particularités et avantages apparaîtront à la lecture de la description qui va suivre, la description faisant référence aux dessins annexés parmi lesquels :
- la figure 1 est une vue schématique d'un groupe motopropulseur conforme à l'invention ;
- la figure 2 est un diagramme de la commande des turbocompresseurs du groupe motopropulseur ;
- la figure 3 est un diagramme de l'apprentissage de la valeur de correction.

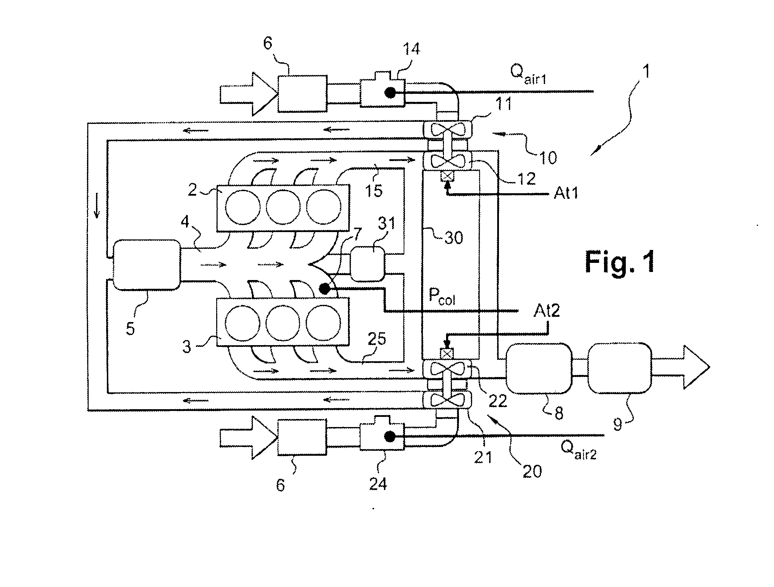

Le groupe motopropulseur 1 représenté sur la figure 1 comporte un premier 2 et un deuxième banc 3 de cylindres d'un moteur à six cylindres disposés en V. Le groupe motopropulseur comporte également deux turbocompresseurs 10, 20 pour suralimenter le moteur. Il comporte un collecteur d'admission 4 commun alimentant en air d'admission les cylindres de chaque banc 2, 3.

Un premier et un deuxième circuit d'admission d'air comportent successivement une prise d'air 5, un filtre à air 6, un compresseur 11, 21 de l'un des turbocompresseurs. Les sorties des compresseurs sont réunies pour alimenter un échangeur commun 5, puis le collecteur d'admission 4. Chaque circuit d'admission comporte un débitmètre 14, 24, par exemple placé entre le filtre à air 6 et le compresseur 11, 21, pour délivrer respectivement une première Qair1 et une deuxième mesure de débit d'air Qair2. Les débitmètres sont par exemple des capteurs à fil chaud. Une sonde de pression 7 est placée dans le collecteur d'admission 4 pour délivrer une mesure de pression de suralimentation Pcol.

Chaque banc de cylindre 2, 3 est connecté à une turbine 12, 22 de l'un des turbocompresseurs 10, 20 par un collecteur d'échappement 15, 25 pour évacuer les gaz d'échappement issu des cylindres. Les sorties des turbines sont reliées à une ligne d'échappement commune comportant par exemple un filtre à particules 8 et un silencieux 9. Les turbines 12, 22 sont du type à géométrie variable, de manière à pouvoir régler leur point de fonctionnement grâce à un signal d'actionnement des turbocompresseurs.

Un circuit de recyclage 30 est connecté à chaque collecteur d'échappement 15, 25 et au collecteur d'admission 4 par l'intermédiaire d'une vanne de recyclage 31 pour permettre le recyclage de gaz d'échappement sur commande.

Ce groupe motopropulseur 1 est commandé par un procédé mis en oeuvre par un calculateur, non représenté. Il met en oeuvre en particulier un procédé de commande des turbines, en délivrant deux signaux d'actionnement, ces signaux étant corrigés pour équilibrer le fonctionnement des turbocompresseurs 10, 20.

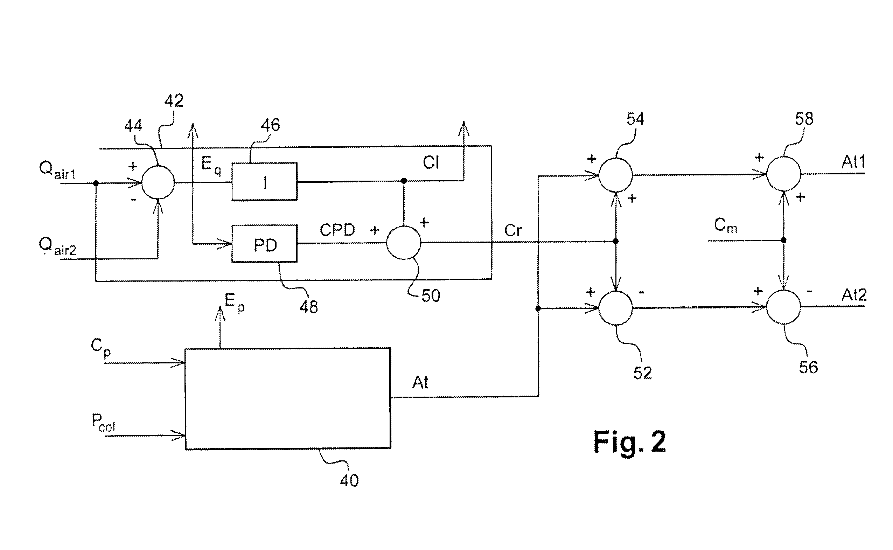

En se référant à la figure 2, le calculateur détermine une consigne de pression de suralimentation Cp et la délivre à un régulateur de pression 40. Dans le régulateur de pression 40, la consigne de pression de suralimentation est comparée à la mesure de la pression de suralimentation Pcol pour déterminer un signal d'actionnement At des turbocompresseurs. De plus, le régulateur de pression 40 délivre une différence de pression Ep entre la consigne de pression Cp et la mesure de la pression Pcol.

Par ailleurs, le calculateur comporte aussi des moyens d'équilibrage 42 qui reçoivent les mesures de débit d'air Qair1, Qair2, et délivrent un signal de régulation Cr. Le signal de régulation Cr est reçu par un additionneur 54 qui reçoit également le signal d'actionnement At. La sortie de l'additionneur 54 est reçue par un additionneur 58 qui reçoit également une valeur de correction mémorisée Cm pour délivrer un premier signal d'actionnement corrigé At1. La somme du signal de régulation Cr et de la valeur de correction mémorisée Cm forment un signal de correction.

De même, le signal de régulation Cr est reçu par une entrée négative d'un soustracteur 52 qui reçoit également sur une entrée positive le signal d'actionnement At. La sortie du soustracteur 52 est reçue sur une entrée positive par un soustracteur 56 qui reçoit également sur une entrée négative 1a valeur de correction mémorisée Cm, pour délivrer un deuxième signal d'actionnement corrigé At2. Le premier At1 et le deuxième signal d'actionnement corrigé At2 commandent respectivement la première 12 et la deuxième turbine 22.

Les moyens d'équilibrage comportent un soustracteur 44 recevant, sur une entrée positive, la première mesure de débit d'air et, sur une entrée négative, la deuxième mesure de débit d'air Qair2. La différence de débit d'air Eq issue du soustracteur 44 est envoyée en entrée d'une part à un intégrateur 46, qui délivre un terme intégral CI, et à un module 48 calculant un terme produit-dérivée CPD. Le terme intégral CI et le terme produit-dérivée CPD sont reçus par un additionneur 50 qui délivre le signal de régulation Cr.

L'intégrateur 46, le module 48 et l'additionneur 50 forment un régulateur de type PID (produit-intégrale-dérivée) qui génèrent un signal de régulation Cr pour diminuer la différence entre Qair1 et Qair2. Le signal de régulation Cr et la valeur de correction mémorisée sont additionnés au signal d'actionnement At par les additionneurs 54 et 58 pour générer le premier signal d'actionnement corrigé At1. De même, le signal de régulation Cr et la valeur de correction mémorisée sont soustraits au signal d'actionnement At par les soustracteurs 52 et 56 pour générer le deuxième signal d'actionnement corrigé At2.

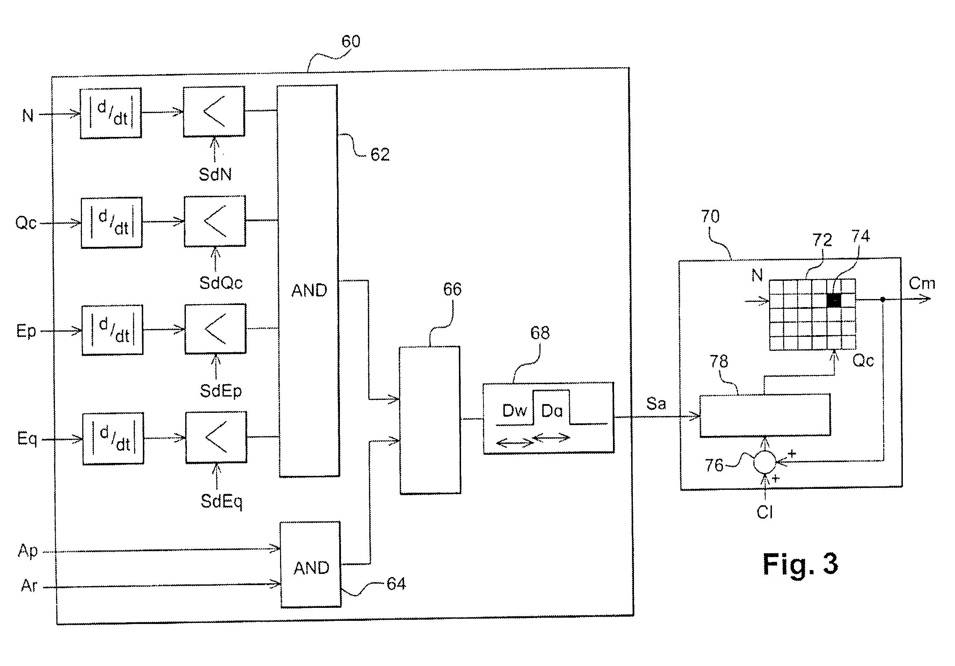

La figure 3 explique la manière dont la valeur de correction mémorisée Cm est élaborée. Un module d'évaluation 60 des conditions d'apprentissage reçoit en entrée la vitesse de rotation du moteur N, appelée également régime moteur, le débit de carburant Qc, la différence de pression Ep et la différence de débit d'air Eq. Par ailleurs, le module d'évaluation reçoit également un signal Ap indiquant l'activation de la détermination de la consigne de pression de suralimentation et un signal Ar indiquant l'activation de la détermination du signal de correction. Le module d'évaluation 60 délivre un signal d'apprentissage Sa indiquant que les conditions d'apprentissage sont réunies.

Le signal d'apprentissage Sa est reçu par un module de mémorisation 70 contenant une table 72, appelée également cartographie. Le module de mémorisation 70 reçoit également le terme intégral CI en entrée, le régime moteur N et le débit de carburant Qc, et délivre la valeur de correction mémorisée Cm. La valeur de correction mémorisée Cm est lue dans la table 72 en fonction du régime moteur N et du débit de carburant Qc, d'une manière classique. Le module de mémorisation comporte un additionneur 76 recevant la valeur de correction mémorisée Cm et le terme intégral CI. La somme de ces deux termes est délivrée à une bascule 78 commandée par le signal d'apprentissage Sa. La bascule 78 délivre la somme vers la table 72.

Pour chaque signal des quatre signaux N, Qc, Ep et Eq, le module d'évaluation 60 calcule la valeur absolue de la dérivée par rapport au temps, qu'il compare ensuite à un seuil prédéterminé, respectivement SdN, SdQc, SdEp, SdEq pour établir un critère de stabilité. Le critère de stabilité n'est vrai que si la valeur absolue de la dérivée est inférieure au seuil prédéterminé SdN, SdQc, SdEp, SdEq. Les critères de stabilité sont des entrées d'une première porte logique 62 qui donne une sortie vraie uniquement si toutes ses entrées sont vraies, c'est-à-dire si tous les critères de stabilité sont réunis.

Le module d'évaluation 60 comporte également une deuxième porte logique qui reçoit en entrée les signaux Ap et Ar, et délivre un signal de conditions d'état, vrai uniquement si les signaux Ap et Ar indiquent que les déterminations de la consigne de pression et du signal de correction sont actives. Les signaux issus de la première porte 62 et de la deuxième porte 64 sont des entrées d'une troisième porte 66 qui délivre en sortie un signal de conditions d'apprentissage, vrai uniquement si les deux signaux d'entrée sont vrais.

Le signal de sortie de la troisième porte est l'entrée d'un module de temporisation 68. Lorsque le signal issu de la troisième porte est devenu et resté vrai pendant une durée d'attente Dw, le module de temporisation 68 délivre un signal d'apprentissage Sa pendant une durée d'apprentissage Da.

Lorsque le module de mémorisation 70 reçoit le signal d'apprentissage Sa, il détermine en fonction du débit carburant Qc et du régime moteur N une cellule 74 de la table devant être mise à jour. La somme de la valeur mémorisée et du terme intégral CI, délivrée par la bascule 78, est alors stockée dans la cellule 74. Au même moment, le terme intégral CI est annulé dans l'intégrateur 46.

L'exemple qui vient d'être décrit s'applique à un groupe motopropulseur dont les collecteurs d'échappement sont reliés entre eux. Cependant, dans le cas où ceux-ci sont séparés, le sens du signal de correction doit être inversé, par exemple par le remplacement des additionneurs 54, 48 par des soustracteurs, et des soustracteurs 52, 56 par des additionneurs. Les collecteurs d'échappement sont séparés soit par construction, soit en fonction de l'état de la commande du recyclage de gaz d'échappement.

Par ailleurs, plutôt que d'annuler le terme intégral lors de la mémorisation d'une nouvelle valeur, il est possible d'attendre qu'une cellule ne soit plus utilisée avant d'y stocker une valeur modifiée.

De plus, la cartographie 72 peut être perfectionnée par l'utilisation de variables d'entrée supplémentaires telles que la température de l'air d'entrée, la pression atmosphérique, la température d'eau de refroidissement du moteur ou le taux de recyclage des gaz d'échappement. Un autre perfectionnement de la cartographie est de fournir une valeur de correction mémorisée par interpolation entre les valeurs stockées dans des cellules adjacentes. Un autre perfectionnement est aussi de limiter l'apprentissage aux cas où le point de fonctionnement, représenté par les valeurs des variables retenues, est proche d'un point de fonctionnement central correspondant à la cellule.

L'invention peut s'appliquer aux cas où les turbocompresseurs ne sont pas à géométrie variable, mais où le circuit d'échappement comporte des vannes de décharge (appelée aussi waste-gate) contrôlables, ou tout autre moyen de contrôle de l'efficacité des turbocompresseurs.

## Revendications

1. Procédé de commande d'un moteur suralimenté en air par deux turbocompresseurs (10, 20) alimentant deux bancs de cylindres (2, 3) par un collecteur commun (4), dans lequel:
- on détermine une consigne de pression de suralimentation (Cp),
- on détermine un écart de débit d'air (Eq) traversant chaque turbocompresseur (10, 20),
- on détermine un signal d'actionnement des turbocompresseurs (At) pour obtenir la consigne de pression (Cp) de suralimentation dans le collecteur,
- on commande chaque turbocompresseur (10, 20) avec un signal d'actionnement corrigé (Atl, At2) par un signal de correction pour diminuer l'écart de débit d'air entre les turbocompresseurs,
**caractérisé en ce que** le signal de correction comprend une valeur de correction mémorisée (Cm) et fonction du point de fonctionnement du moteur.

2. Procédé de commande selon la revendication 1, dans lequel la valeur de correction mémorisée (Cm) est apprise lors du fonctionnement du moteur.

3. Procédé de commande selon la revendication 2, dans lequel la valeur de correction mémorisée (Cm) est issue du signal de correction (Cr) et mémorisée lorsque des conditions d'apprentissage sont réunies.

4. Procédé de commande selon la revendication 3, dans lequel les conditions d'apprentissage comportent des critères de stabilité sur au moins l'une des variables suivantes : la vitesse de rotation du moteur (N), le débit de carburant (Qc), l'écart de pression de suralimentation (Ep), l'écart de débit d'air (Eq).

5. Procédé de commande selon la revendication 3, dans lequel les conditions d'apprentissage comportent des conditions d'état, parmi lesquelles l'activation de la détermination de la consigne de pression de suralimentation (Ap) et du signal de correction (Ar).

6. Procédé de commande selon les revendications 4 et 5 prises en combinaison, dans lequel les critères de stabilité et les conditions d'état doivent être satisfaits pendant au moins une durée prédéterminée (Dw) pour que les conditions d'apprentissage soient réunies.

7. Procédé de commande selon la revendication 2, dans lequel le signal de correction est déterminé par la somme de la valeur de correction mémorisée (Cm) et d'un signal de régulation (Cr) issu d'une régulation de type proportionnel-intégrale-dérivée (PID), la valeur apprise étant un terme intégral (CI) de la régulation.

8. Procédé de commande selon la revendication 2, dans lequel la valeur de correction mémorisée (Cm) est stockée dans une cartographie (72) ayant en entrée des variables (N, Qc) représentant le point de fonctionnement du moteur.

9. Procédé de commande selon les revendications 7 et 8 prises en combinaison, dans lequel, avant de mémoriser une nouvelle valeur dans la cartographie (72), on vérifie que le point de fonctionnement du moteur a changé et qu'ainsi, on n'utilise plus la valeur à remplacer.

10. Procédé de commande selon les revendications 7 et 8 prises en combinaison, dans lequel, au moment de mémoriser une nouvelle valeur dans la cartographie, on annule le terme intégral (CI) dans la régulation.

11. Système de commande d'un moteur suralimenté en air par deux turbocompresseurs (10, 20) alimentant deux bancs de cylindres (2, 3) par un collecteur commun (4), le système comportant :
- des moyens de commande pour déterminer une consigne de pression de suralimentation (Cp),
- des moyens de mesure (14, 24) d'un écart de débit d'air (Eq) traversant chaque turbocompresseur (10, 20),
- des moyens de commande (40) pour délivrer un signal d'actionnement (At) des turbocompresseurs et obtenir la consigne de pression de suralimentation dans le collecteur (4),
- des moyens d'équilibrage (42) pour déterminer un signal de correction permettant d'établir un signal d'actionnement corrigé (Atl, At2) pour chaque turbocompresseur (10, 20), et diminuer l'écart de débit d'air (Eq) entre les turbocompresseurs (10, 20),
**caractérisé en ce qu**'il comporte en outre des moyens de mémorisation (72) pour fournir, en fonction du point de fonctionnement du moteur (N, Qc), une valeur de correction mémorisée (Cm) pour composer le signal de correction.

## Claims

1. Control method for an engine supercharged with air by two turbochargers (10, 20) feeding two banks of cylinders (2, 3) via a common manifold (4), in which:
- a required supercharging pressure (Cp) is determined;
- a difference in air flow rate (Eq) passing through each turbocharger (10, 20) is determined;
- a turbocharger activation signal (At) is determined to obtain the required supercharging pressure (Cp) in the manifold; and
- each turbocharger (10, 20) is controlled with an activation signal (At1, At2) corrected by a corrective signal to reduce the difference in air flow rate between the turbochargers,
**characterized in that** the corrective signal comprises a stored correction value (Cm) which depends on the operating point of the engine.

2. Control method according to Claim 1, **characterized in that** the stored correction value (Cm) is programmed while the engine is operating.

3. Control method according to Claim 2, **characterized in that** the stored correction value (Cm) is derived from the corrective signal (Cr) and stored when programming conditions are met.

4. Control method according to Claim 3, **characterized in that** the programming conditions include stability criteria for at least one of the following variables: the speed of rotation of the engine (N), the fuel flow rate (Qc), the supercharging pressure difference (Ep), and the air flow rate difference (Eq).

5. Control method according to Claim 3, **characterized in that** the programming conditions include state conditions, among which are the activation of the determination of the required supercharging pressure (Cp) and the corrective signal (Ar).

6. Control method according to Claims 4 and 5 combined, **characterized in that** the stability criteria and the state conditions must be satisfied for at least a preset time (Dw) so that the programming conditions are met.

7. Control method according to Claim 2, **characterized in that** the corrective signal is determined by the sum of the stored correction value (Cm) and a control signal (Cr) derived from a proportional-integral-derivative (PID) type control, the programmed value being an integral term (CI) of the control.

8. Control method according to Claim 2, **characterized in that** the stored correction value (Cm) is stored in a map (72) having as input variables (N, Qc) indicating the operating point of the engine.

9. Control method according to Claims 7 and 8 combined, **characterized in that**, before storing a new value in the map (72), there is a check that the operating point of the engine has changed and that therefore, the value to be replaced is no longer used.

10. Control method according to Claims 7 and 8 combined, **characterized in that**, when a new value is stored in the map, the integral term (CI) in the control is deleted.

11. Control system for an engine supercharged with air by two turbochargers (10, 20) feeding two banks of cylinders (2, 3) via a common manifold (4), the system including:
- control means for determining a required supercharging pressure (Cp);
- means for measuring (14, 24) a difference in air flow rate (Eq) passing through each turbocharger (10, 20);
- control means (40) for supplying a turbocharger activation signal (At) and obtaining the required supercharging pressure in the manifold (4); and
- balancing means (42) for determining a corrective signal for producing a corrected activation signal (At1, At2) for each turbocharger (10, 20), and reducing the difference in air flow rate (Eq) between the turbochargers (10, 20),
**characterized in that** it includes in addition storage means (72) for supplying, according to the operating point of the engine (N, Qc), a stored correction value (Cm) for composing the corrective signal.

## Patentansprüche

1. Verfahren zur Steuerung eines von zwei Turboladern (10, 20) mit Luft aufgeladenen Motors, die zwei Zylinderbänke (2, 3) über einen gemeinsamen Kollektor (4) speisen, bei dem
- ein Aufladedruck-Sollwert (Cp) bestimmt wird,
- eine Abweichung (Eq) des Luftdurchsatzes bestimmt wird, der jeden Turbolader (10, 20) durchquert,
- ein Betätigungssignal der Turbolader (At) bestimmt wird, um den Aufladedruck-Sollwert (Cp) im Kollektor zu erhalten,
- jeder Turbolader (10, 20) mit einem durch ein Korrektursignal korrigierten Betätigungssignal (Atl, At2) gesteuert wird, um die Luftdurchsatzabweichung zwischen den Turboladern zu verringern,
**dadurch gekennzeichnet, dass** das Korrektursignal einen gespeicherten Korrekturwert (Cm) enthält, der vom Arbeitspunkt des Motors abhängt.

2. Steuerverfahren nach Anspruch 1, bei dem der gespeicherte Korrekturwert (Cm) beim Betrieb des Motors gelernt wird.

3. Steuerverfahren nach Anspruch 2, bei dem der gespeicherte Korrekturwert (Cm) vom Korrektursignal (Cr) stammt und gespeichert wird, wenn Lernbedingungen gegeben sind.

4. Steuerverfahren nach Anspruch 3, bei dem die Lernbedingungen Stabilitätskriterien betreffend mindestens eine der folgenden Variablen enthalten: die Drehgeschwindigkeit des Motors (N), der Kraftstoffdurchsatz (Qc), die Aufladedruck-Abweichung (Ep), die Luftdurchsatz-Abweichung (Eq).

5. Steuerverfahren nach Anspruch 3, bei dem bei dem die Lernbedingungen Zustandsbedingungen enthalten, darunter die Aktivierung der Bestimmung des Aufladedruck-Sollwerts (Cp) und des Korrektorsignals (Ar).

6. Steuerverfahren nach den Ansprüchen 4 und 5 zusammen genommen, bei dem die Stabilitätskriterien und die Zustandsbedingungen während mindestens einer vorbestimmten Dauer (Dw) erfüllt sein müssen, damit die Lernbedingungen gegeben sind.

7. Steuerverfahren nach Anspruch 2, bei dem das Korrektursignal durch die Summe des gespeicherten Korrekturwerts (Cm) und eines Regelungssignals (Cr) bestimmt wird, das von einer Regelung vom proportional-integral-differentialen Typ (PID) stammt, wobei der gelernte Wert ein integraler Term (CI) der Regelung ist.

8. Steuerverfahren nach Anspruch 2, bei dem der gespeicherte Korrekturwert (Cm) in einer Kartographie (72) gespeichert wird, die am Eingang Variable (N, Qc) hat, die den Arbeitspunkt des Motors darstellen.

9. Steuerverfahren nach den Ansprüchen 7 und 8 zusammen genommen, bei dem vor der Speicherung eines neuen Werts in der Kartographie (72) geprüft wird, dass der Arbeitspunkt des Motors sich verändert hat und dass so der zu ersetzende Wert nicht mehr verwendet wird.

10. Steuerverfahren nach den Ansprüchen 7 und 8 zusammen genommen, bei dem im Moment der Speicherung eines neuen Werts in der Kartographie der integrale Term (CI) in der Regelung annulliert wird.

11. System zur Steuerung eines von zwei Turboladern (10, 20) mit Luft aufgeladenen Motors, die zwei Zylinderbänke (2, 3) über einen gemeinsamen Kollektor (4) speisen, wobei das System aufweist:
- Steuermittel, um einen Aufladedruck-Sollwert (Cp) zu bestimmen,
- Mittel (14, 24) zur Messung einer Abweichung des Luftdurchsatzes (Eq), der jeden Turbolader (10, 20) durchquert,
- Steuermittel (40), um ein Betätigungssignal der Turbolader (At) zu liefern und den Aufladedruck-Sollwert im Kollektor (4) zu erhalten,
- Ausgleichsmittel (42), um ein Korrektursignal zu bestimmen, das es ermöglicht, ein korrigiertes Betätigungssignal (Atl, At2) für jeden Turbolader (10, 20) herzustellen und die Abweichung des Luftdurchsatzes (Eq) zwischen den Turboladern (10, 20) zu verringern,
**dadurch gekennzeichnet, dass** es außerdem Speichermittel (72) aufweist, um in Abhängigkeit vom Arbeitspunkt des Motors (N, Qc) einen gespeicherten Korrekturwert (Cm) zu liefern, um das Korrektursignal zu bilden.
